# EUROPEAN PATENT APPLICATION

(11) **EP 4 333 402 A1**
(43) Date of publication of application: **06.03.2024**
(21) Application number: 23194659.1
(22) Date of filing: 31.08.2023
(51) Int. Cl.: H04L 51/214, H04L 51/222, H04L 51/58

(54) **PROGRAMMATIC OMNICHANNEL ORCHESTRATION IN LARGE-SCALE MESSAGING SYSTEMS**

(30) Priority: 31.08.2022 US 202263402733 P; 30.08.2023 US 202318458580
(71) Applicant: MessageBird BidCo B.V., 1079 TX Amsterdam (NL)
(72) Inventor: MAJID, Dana, 1079 TX Amsterdam (NL); VIS, Robert, 1079 TX Amsterdam (NL)
(74) Representative: Mewburn Ellis LLP

(57) **Abstract**

A computer-implemented method, comprising using a message application processor, receiving a first request from a separate application server computer executing a particular computer program application to create and cause sending a digital electronic message, the request comprising a template version identifier, the template version identifier being associated in a database with a previously defined template that associates a locale value and a platform value, the request specifying a location value corresponding to a geographic location of a recipient of the message; in response to the request, the message application processor creating the message and assigning a status value to the message, the status value being associated with a first state of the message; the message application processor causing the message to transition to a second state; the message application processor performing a flow hook lookup to determine whether a flow definition is associated with the transition from the first state to the second state and with the particular computer program application, and in response thereto, evaluating the flow definition based on the message to result in executing an operation specified in the flow definition using one or more of a payload of the message, the status value, or a channel identifier of the message; the message application processor selecting, based on the platform value and locale value of the template corresponding to the template version identifier, and the location value of the recipient, a particular communication channel among a plurality of different communication channels, and transmitting a request to the particular communication channel to transmit the message using the particular communication channel.

## Description

### BENEFIT CLAIM

This application claims the benefit of provisional application 63/402,733, filed August 31, 2022, the entire contents of which are hereby incorporated by reference for all purposes as if fully set forth herein.

### COPYRIGHT NOTICE

A portion of the disclosure of this patent document contains material that is subject to copyright protection. The copyright owner has no objection to the facsimile reproduction by anyone of the patent document or the patent disclosure, as it appears in the Patent and Trademark Office patent file or records, but otherwise reserves all copyright or rights whatsoever. Ⓒ 2021-2022 MessageBird.

### TECHNICAL FIELD

One technical field of the present disclosure is large-scale distributed computer systems that are programmed to operate as short message transmission systems. Another technical field is the programmatic control of the communication of messages using multiple different channels or platforms with large-scale messaging systems.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Large-scale distributed computer systems have entered wide use to support the transmission of short text messages, instant message services, verification messages, and other applications. With these systems, enterprises can define flows of messages via Short Message Service (SMS), MMS, e-mail, WHATSAPP, other instant messengers, and other communication channels such as chat services. Flows can specify conversations across multiple different communication channels, verification via two-factor authentication, or other services or applications. The core operating software of the messaging systems, which implement state machines to define transitions from one message state to another, can facilitate large numbers of flows for many enterprises at once.

These systems and their core operating software offer tremendous flexibility and scalability. However, supporting the transmission of billions of messages, individual enterprises may desire to prepare a single message for transmission using multiple different platforms. Enterprises that send large volumes of messages do not want to individually prepare the same message content using the specific facilities of multiple different messaging platforms. If individualized attention is required, overall message throughput goes down, and far more computing resources such as memory and CPU cycles are required. Therefore, the owners and operators of messaging infrastructure systems cannot efficiently transmit the same message content across multiple different platforms without significant process and resource inefficiencies. Furthermore, existing large-scale messaging systems have not provided convenient or simple means for enterprises and non-technical personnel to define how to prepare and transmit the same or similar message content seamlessly across multiple different messaging channels. Ultimately, specifying multiple different communication channels is not convenient or efficient and typically does not involve programmatic means that are capable of automated machine interpretation and execution.

Thus, there is a long-standing, unmet need in the field for improved ways of preparing and sending digital electronic messages across multiple message communication platforms more efficiently and without repetitive interaction with the different platforms.

### SUMMARY

The appended claims may serve as a summary of the invention.

### BRIEF DESCRIPTION OF THE DRAWINGS

In the drawings:
FIG. 1 illustrates a distributed computer system showing the context of use and principal functional elements with which one embodiment could be implemented.
FIG. 2 illustrates transitions of messages between a plurality of different message states.
FIG. 3 illustrates an example process flow that can be programmed to implement the enrollment of enterprises or users in a message processing system.
FIG. 4 is a message flow diagram that illustrates an example interaction of different functional elements of FIG. 1 as messages are created and transmitted.
FIG. 5 illustrates the use of templates in message transmission.
FIG. 6 illustrates an example of the logical data structure of a template, in one embodiment.
FIG. 7 illustrates a computer system with which one embodiment could be implemented.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention. Further, the text of this disclosure, in combination with the drawing figures, is intended to state in prose the algorithms that are necessary to program a computer to implement the claimed inventions, at the same level of detail that is used by people of skill in the arts to which this disclosure pertains to communicate with one another concerning functions to be programmed, inputs, transformations, outputs and other aspects of programming. That is, the level of detail set forth in this disclosure is the same level of detail that persons of skill in the art normally use to communicate with one another to express algorithms to be programmed or the structure and function of programs to implement the inventions claimed herein.

Embodiments are described in the sections below according to the following outline:
1. General Overview
2. Structural & Functional Overview
3. Implementation Example - Channels, Templates, Application Programming Interface (API) Example
4. Implementation Example - Hardware Overview

### 1. GENERAL OVERVIEW

A distributed computer system implements a large-scale message processing system that can initiate, request sending, and monitor the transmission of messages using any of a plurality of different communication channels that are independent of the system. Different users, entities, or enterprises, including those having a customer relationship with an owner or operator of the message processing system, operate independent applications that can call the message processing system to request the system to originate or publish messages on any one or more of the channels. Each message is associated with a state value, and message processing is defined according to a state machine having states and transitions. A call to an API of the message processing system provides an access key, specifies an active channel that was previously installed, a message body or template, and optionally media links or media to be uploaded. The message processing system handles preparing the message body or template and media for whatever active channel is specified, and successive calls can specify the same message body or template but different active channels. In this manner, senders can dispatch the same message on multiple different channels without perchannel preparation of the message body or media for the channels. Furthermore, the message processing system can be updated periodically to support other messaging channels yet the sender calls do not require changes other than specifying a newly supported channel after installing that channel for the sender.

Optionally, the different users, entities, or enterprises also can define application-specific, customer-specific flows, each flow being associated with one or more state transitions. Each flow can comprise rules or programmed logic and can include calls to outside services such as customer relationship management (CRM) systems, marketing automation systems, customer support systems, private databases, collaborative productivity applications, and issue tracking systems. At runtime, the applications call the message processing system to originate messages, which transition between states as message scheduling, sending, delivery, or exceptions occur. As a message transitions between states, a message publisher or originator of the message processing system acting on behalf of the applications can detect the transitions, determine based upon context data whether to look up and use a flow definition for a particular transition, and invoke a flow service to evaluate the flow definition with the message. The flow service evaluates the flow definition over the message and its metadata, resulting in a transformation of a payload, state, or channel of the message. The flow service responds to the message publisher or originator, which can return a response to the application. Flow invocation can occur at any state transition or state, and logic in a flow can be arbitrarily complex.

For purposes of illustrating a clear example, certain sections of this disclosure use terminology and describe processes that are specific to SMS messaging. However, other embodiments may implement voice calling, voice messaging, email transfer, and messaging using applications, apps, or platforms other than SMS, through similar calls, objects, formats, processes, and operations.

In various embodiments, the disclosure encompasses the subject matter of the following numbered clauses:
1. A computer-implemented method, comprising: using a message application processor, receiving a first request from a separate application server computer executing a particular computer program application to create and cause sending a digital electronic message, the request specifying a channel identifier corresponding to a particular communication channel among a plurality of different communication channels, a template version identifier, the template version identifier being associated in a database with a previously defined template that associates a locale value and a platform value, the request specifying a location value corresponding to a geographic location of a recipient of the message; in response to the request, the message application processor creating the digital electronic message based on the previously defined template and assigning a status value to the message, the status value being associated with a first state of the message; the message application processor transitioning the message to a second state; the message application processor selecting, based on the platform value and locale value of the template corresponding to the template version identifier, the location value of the recipient, and the channel identifier, a particular communication channel among a plurality of different communication channels, and transmitting a request to the particular communication channel to transmit the message using the particular communication channel.
2. The computer-implemented method of clause 1, further comprising transformation of the message from a first payload value to a second payload value.
3. The computer-implemented method of clause 1, further comprising transformation of the status value to a third state.
4. The computer-implemented method of clause 1, the first request further comprising one or more media links, the method further comprising formatting the digital electronic message to include one or more media items that the media links reference.
5. The computer-implemented method of clause 1, the first request further comprising one or more media links, the method further comprising accessing the one or more media links, uploading one or more media items that the media links reference, and formatting the digital electronic message to include the one or more media items after the uploading.
6. The computer-implemented method of clause 1, further comprising receiving, from the separate application server computer executing the particular computer program application to create, a second request to install the particular communication channel among the plurality of different communication channels and, in response, updating a database record for an account associated with the separate application server computer to specify that the particular communication channel is active for the separate application server computer.
7. The computer-implemented method of clause 1, further comprising receiving, in the first request, an access key and in response: retrieving from a database an access profile that is associated in a database record with the access key; inspecting one or more permissions in the access profile; executing the creating, transitioning, and selecting only in response to determining that at least one permission among the one or more permissions authorizes processing messages for the particular communication channel.
8. The method of clause 1, the plurality of different communication channels comprising two or more of SMS; MMS; e-mail; WHATSAPP; FACEBOOK MESSENGER; WEIXIN/WECHAT; QQ; TELEGRAM; SNAPCHAT; SLACK; SIGNAL; SKYPE; DISCORD; VIBER.
9. The method of clause 1, the first state and the second state comprising two states among a plurality of different possible states of a state machine that the message application processor implements to process the message.
10. The method of clause 9, the different possible states comprising: created, scheduled, buffered, sent, delivered, delivery failure, and expired.
11. The method of clause 9, in which the operation in the flow definition specifies a plurality of machine executable script code instructions.

### 2. STRUCTURAL & FUNCTIONAL OVERVIEW

### 2.1 MESSAGE APPLICATION PROCESSOR AND ENVIRONMENT

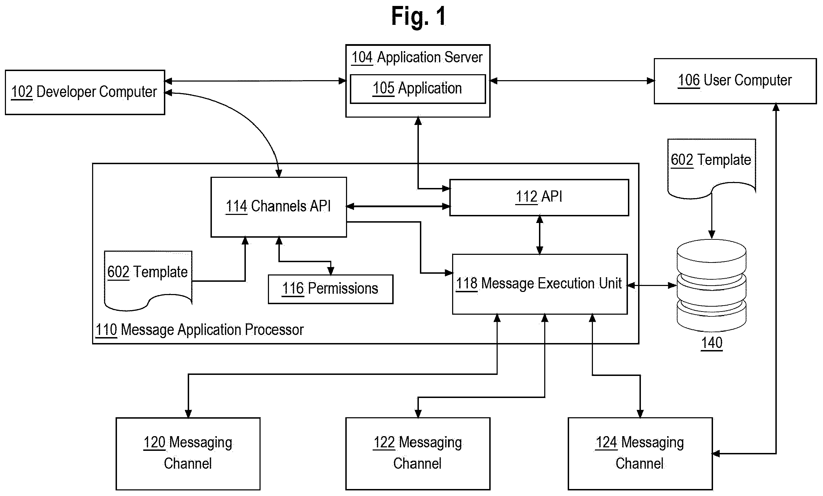

FIG. 1 illustrates a distributed computer system showing the context of use and principal functional elements with which one embodiment could be implemented. In an embodiment, a computer system of FIG. 1 comprises components that are implemented at least partially by hardware at one or more computing devices, such as one or more hardware processors executing stored program instructions stored in one or more memories for performing the functions that are described herein. In other words, all functions described herein are intended to indicate operations that are performed using programming in a special-purpose computer or general-purpose computer, in various embodiments. FIG. 1 illustrates only one of many possible arrangements of components configured to execute the programming described herein. Other arrangements may include fewer or different components, and the division of work between the components may vary depending on the arrangement.

FIG. 1, and the other drawing figures and all of the description and claims in this disclosure, are intended to present, disclose, and claim a technical system and technical methods in which specially programmed computers, using a special-purpose distributed computer system design, execute functions that have not been available before to provide a practical application of computing technology to the problem of machine learning model development, validation, and deployment. In this manner, the disclosure presents a technical solution to a technical problem, and any interpretation of the disclosure or claims to cover any judicial exception to patent eligibility, such as an abstract idea, mental process, method of organizing human activity, or mathematical algorithm, has no support in this disclosure and is erroneous.

In the example of FIG. 1, a developer computer 102 is communicatively coupled, directly or indirectly via one or more networks or network links, to an application server 104, which is also coupled to a message application processor 110 and to a user computer 106. The message application processor 110 is coupled to a plurality of different messaging channels 120, 122, 124. Lines and arrows joining the developer computer 102, application server 104, message application processor 110, user computer 106, and messaging channels 120, 122, 124 broadly represent any combination of one or more local area networks, wide area networks, campus networks, or internetworks, using any of terrestrial or satellite links and/or wired or wireless network links.

Generally, in this arrangement, developer computer 102 is associated with a developer, owner, or operator of an interactive, online computer program application 105 that application server 104 executes. The developer computer 102 provides programming, configuration, testing, and maintenance concerning one or more applications 105 that execute at application server 104. User computer 106 interacts with the application server 104 to obtain a substantive service, such as a merchant service, online shopping service, financial service, entertainment or game service, educational service, or any other substantive application. Application server 104 can implement or host an HTTP server to facilitate delivering dynamic HTML applications to clients such as user computer 106 and to accomplish parameterized HTTP GET and POST calls to message application processor 110. Application server 104 can implement an SMS handler for inbound (received) SMS messages using the POST HTTP method. Message application processor 110 originates messages to the user computer 106 via messaging channels 120, 122, 124, on behalf of the application server 104 and its applications 105.

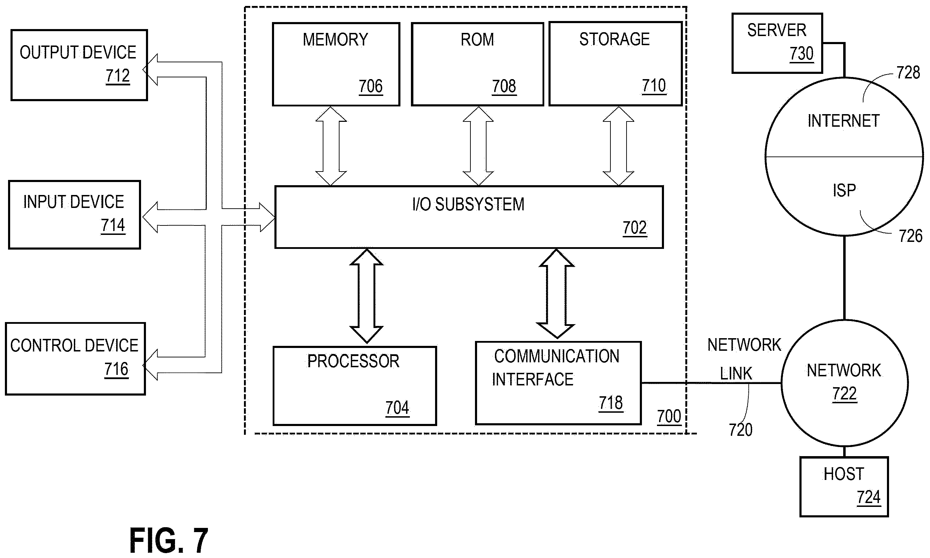

Each of the developer computer 102 and user computer 106 can have the structure shown for a general-purpose computer in FIG. 7 and can be any of a laptop computer, desktop computer, workstation, or mobile computing device, in various embodiments. Application server 104 and/or message application processor 110 can be implemented using one or more server computers, processor clusters, and/or virtual computing instances in any of an enterprise data room, private data center, or public data center such as a cloud computing facility. Typically, the application server 104 and message application processor 110 are implemented using flexible cloud computing services with which processors, memory, and storage with different numbers, sizes, or capacities can be instantiated based on processing demand or number of clients.

The messaging channels 120, 122, 124 represent message networks, applications, or services, and typically are independent of the message application processor 110. "Channel," in this context, refers broadly to a message service provider, all its independent infrastructure, and its software applications, application programming interfaces, and related services. Examples of channels include, as of this writing: SMS; MMS; e-mail; WHATSAPP; FACEBOOK MESSENGER; WEIXIN/WECHAT; QQ; TELEGRAM; SNAPCHAT; SLACK; SIGNAL; SKYPE; DISCORD; VIBER. The messaging channels 120, 122, 124 also can represent a mail transfer agent (MTA) integrated into the message application processor 110 or external, for sending electronic mail (email). The messaging channels 120, 122, 124 also can include any message service, system, software, application, or app that is functionally equivalent to one or more of the foregoing and developed after the time of this writing.

In one embodiment, message application processor 110 comprises an application programming interface (API) 112, channels API 114, and message execution unit 118. Each of the API 112, channels API 114, and message execution unit 118 can be implemented using one or more sequences of computer program instructions, methods, functions, objects, or other units of program instructions. API 112 can be implemented as a Representational State Transfer (REST) API having a set of function calls that can be invoked programmatically from an application executing at application server 104. For example, application 105 can format and transmit an HTTP GET or POST request specifying API 112 as an endpoint and having a parameterized payload that identifies a particular API call and values for use in processing the call. When creating a message is requested, the API automatically assigns a unique random identifier value so that applications can always check the status of the message using the API and the ID. API 112 can be integrated with an HTTP server and can be programmed to return an HTTP response to each API call that includes a payload with responsive values. API 112 can implement security controls based on access keys for authorization; for example, an owner or operator of the message application processor 110 securely generates an API key for the particular application 105 of the owner or operator of the application server and/or developer computer 102 and provides the API key to the developer computer. Application 105 is programmed to present the API key to API 112 with each API call to authenticate the call and, as described in other sections, to enable associating flow definitions 116 with message state transitions for messages that are associated with the application. Requests and response payloads can be formatted as JSON using UTF-8 encoding and URL-encoded values.

Channels API 114 can be programmed to respond to calls to create, read, update, or delete channels that a particular workspace, account, enterprise, or user will use to dispatch or receive messages; to format a message body or template for a particular requested and installed channel and to dispatch the formatted message using that channel; to create, read, update, or delete permissions of users or accounts that may use channels; to create, read, update, or delete one or more templates 602; to validate API key values that appear in client calls; to resolve permissions associated with API keys based on access profiles to determine whether a client is authorized to call a specified API function; and to execute other calls, methods, or functions relating to omnichannel orchestration.

Optionally, in an embodiment, developer computer 102 can establish a programmatic connection to the channels API 114 for the purpose of authoring or defining a flow definition (also termed a "flow") that defines one or more message states or state transitions, and one or more instructions, calls, or other logic to be executed for messages having a particular state or state transition. However, the use of flows is not required in all embodiments and is not essential to the techniques of omnichannel orchestration that are described herein. In an embodiment, flow service implements a visual, graphical user interface by which flows can be defined visually using a pointing device of the developer computer 102 to move or place graphical objects representing states, transitions, calls, or services.

Message execution unit 118 represents instructions that implement core message processing functions of the message application processor 110 such as message publishing services, interfaces to messaging channels 120, 122, 124, exception handling, and analytical reports. Message execution unit 118 can be programmed to create, read, update, or delete messages, message metadata, and control metadata in a database 140, which can be implemented using any of relational databases, no-SQL databases, object stores, or other data repositories. The programming and operation of message execution unit 118 are described further in other sections herein. A commercial embodiment of message application processor 110 is the MESSAGEBIRD message processing system of MessageBird, Amsterdam, Netherlands.

In an embodiment, omnichannel message orchestration is facilitated by defining generic message types that enable sending the same message to multiple channels. As not all channels offer native support for all message types, one message may represent multiple channel messages. For example, sending multiple files on Facebook Messenger with Postback actions will be rendered in one manner in the Facebook interface, whereas sending the same set of multiple files would be rendered differently, or not at all, in other channels. Various embodiments may support various combinations of messages and in one embodiment, the following message types are supported: Text messages - Single text message, Single text messages with actions; Image messages - Single image message, Single image message with text, Multiple image message, Single image message with actions, Multiple image message with actions; File messages - Single file message, Single file message with text; Multiple file message; Single file message with actions; Multiple file message with actions; List messages - List message without sections; List message with sections; List message with metadata; Carousel messages - Single cards; Multiple cards; Template messages - Text template with a variable; Image template with a variable; Image with a variable in a button.

The following JSON examples illustrate the results of programmatically transforming the same original message body or template into different coded or programmatic representations for delivery to different channels.

In the first example, a Conversation object is a construct inside which messages are sent and received by a contact, such as a user computer associated with an end customer, and an employee of a business. The Conversation object is defined as follows, and the channel ID here references any of the channels the customer has installed in the context of their workspace.

```
 ‴json }
  "id": "6637e68d-9388-493b-al02-f91cdbdcf49a",
  "name": "My very first conversation",
  "description": ʺʺ,
  "status": "active",
  "visibility": "private",
  "accessibility": "invite-only",
  "featuredParticipants": [
    {
      "id": "32b26323-8b24-43d8-9112-ee003bf5b428",
      "type": "contact",
      "status": "active",
      "displayName": "REDACTED",
      "avatarUrl": ʺʺ } ],
  "activeParticipantCount": 1,
  "pendingParticipantCount": 0,
  "channelId": "07987a4a-8c81-4015-947e-260b2c46934d",
  "lastMessage": {
    "id": "5408d82d-bb09-41df-9596-5a2ac0cd97da",
    "type": "text",
    "preview": {
      "text": "check" },
    "status": "delivered",
    "sender": {
      "id": "32b26323-8b24-43d8-9112-ee003bf5b428",
      "type": "contact",
      "status": "active",
      "displayName": "REDACTED",
      "avatarUrl": ʺʺ },
    "createdAt": "2023-08-04T04:04:51.231Z" },
  "createdAt": "2023-07-25T17:28:38.433Z",
  "updatedAt": "2023-08-04T04:04:51.234Z",
  "platformStyle": "direct" }
```

The Channel object defines the platform uniquely and defines the exact prerequisites that a Channel may have. In the context of WhatsApp the WhatsApp business account ID, definitions can include the WhatsApp-enabled phone number and so on. In addition, it lists out the different capabilities the Channel may have, like support for inbound or outbound messaging.

```
 ‴json
 {
  "id": "07987a4a-8c81-4015-947e-260b2c46934d",
  "status": "active",
  "platformId": "whatsapp",
  "name": "WhatsApp: REDACTED",
  "connectorId": "d6e3b509-5bba-418e-a98f-162fld8571e9",
  "identifier": "1234",
  "contactldentifierKeyOverride": null,
  "contactIdentifierFormatOverride": null,
  "platformServiceUrlOverride": null,
  "platformServiceVersionOverride": null,
  "platformServiceProtocolOverride": null,
  "platformMessageJsonSchemaOverride": null,
  "connectionParams": [
    {"key": "WABA _ID",
      "value": "1234",
      "displayName": "Whatsapp Business account ID",
      "description": "",
      "visibility": "public"},
    {
      "key": "PHONE_NUMBER",
      "value": "REDACTED",
      "displayName": "Phone number",
      "description": "",
      "visibility": "public" },
    {"key": "REGISTRATION_PIN",
      "value": "",
      "displayName": "Registration PIN",
      "description": "",
      "visibility": "internal" },
    {
      "key": "API_MODE",
      "value": "",
      "displayName": ʺʺ,
      "description": "",
      "visibility": "internal" } ],
  "settings": [],
  "preferences": {
    "disableProfileFetching": false },
  "capabilities": {
    "messaging": {
      "displayName": "Messaging capabilities",
      "status": "active",
      "paused": false,
      "name": "messaging",
      "version": 0,
      "createdAt": "2023-07-25T17:22:51.336Z",
      "updatedAt": "2023-07-25T17:22:51.336Z",
      "outgoing": {
         "displayName": "Capability to send outgoing messages",
         "status": "active",
         "paused": false,
         "name": "messaging.outgoing",
         "version": 0,
         "createdAt": "2023-07-25T17:22:51.336Z",
         "updatedAt": "2023-07-25T17:22:51.336Z" },
      "incoming": {
         "displayName": "Capability to receive messages",
         "status": "active",
         "paused": false,
         "name": "messaging.incoming",
         "version": 0,
         "createdAt": "2023-07-25T17:22:51.336Z",
         "updatedAt": "2023-07-25T17:22:51.336Z" },
      "session": {
         "start": {
           "displayName": "Capability to start a session",
           "status": "active",
           "paused": false,
           "name": "messaging. session. start",
           "version": 0,
           "createdAt": "2023-07-25T17:22:51.336Z",
           "updatedAt": "2023-07-25T17:22:51.336Z" },
         "reply": {
           "displayName": "Capability to reply to a session",
           "status": "active",
           "paused": false,
           "name": "messaging.session.reply",
           "version": 0,
           "createdAt": "2023-07-25T17:22:51.336Z",
           "updatedAt": "2023-07-25T17:22:51.336Z" } } } },
  "createdAt": "2023-07-25T17:22:51.336Z",
  "updatedAt": "2023-07-25T17:22:51.496Z"
  
```

An inbound message from a customer reaching out to a business via the WhatsApp channel will then reference the conversation by its identifier. As the conversation is taking place on the WhatsApp channel messages sent to and received from and translated to their generic message representation, as follows:

```
 ‴json
 {
  "id": "4dc4ba87-987c-4bc9-b60e-1cb7ca5ff44e",
  "conversationId": "cfae69dd-3ff2-4c1a-81d8-ab1b040b37de",
  "reference": "4dc4ba87-987c-4bc9-b60e-1cb7ca5ff44e",
  "sender": {
    "id": "e27bea0d-10c5-46ba-b357-86e47e9a9658",
    "type": "contact",
    "status": "active",
    "displayName": "REDACTED",
    "avatarUrl": ʺʺ },
  "draft": false,
  "status": "delivered",
  "source": "channels",
  "body": {
    "type": "text",
    "text": {
      "text": "This is a test message!" } },
  "interactions": null,
  "createdAt": "2023-07-31T10:16:35.706Z",
  "updatedAt": "2023-07-31T10:16:35.706Z" }
```

The same data representation is used for another message that occurred on a different channel like SMS.

```
 {"id": "76b18e31-2f85-462f-9242-3d8bab0c2ba3",
  "conversationId": "alb4896e-471e-46ab-b6fe-5c0c925908f8",
  "reference": "76b18e31-2f85-462f-9242-3d8bab0c2ba3",
  "sender": {
    "id": "92c42a97-e540-4052-9dcb-5102ae38af9c",
    "type": "contact",
    "status": "active",
    "displayName": "REDACTED",
    "avatarUrl": ʺʺ },
  "draft": false,
  "status": "delivered",
  "source": "channels",
  "body": {
    "type": "text",
    "text": {
      "text": "Hjj" } },
  "interactions": null,
  "createdAt": "2023-08-03T12:21:51.817Z",
  "updatedAt": "2023-08-03T12:21:51.817Z" } ...
```

Assume the following conversation message would resolve to the SMS channel, this may look as following:

```
 {"id": "7afd5450-9633-404d-a52c-5a5e9eb4764b",
  "status": "active",
  "platformId": "sms-messagebird",
  "name": "SMS: REDACTED",
  "connectorId": "4f9171a4-a856-4bdf-9219-283e1939f99c",
  "identifier": "REDACTED",
  "contactIdentifierKeyOverride": null,
  "contactIdentifierFormatOverride": null,
  "platformServiceUrlOverride": null,
  "platformServiceVersionOverride": null,
  "platformServiceProtocolOverride": null,
  "platformMessageJsonSchemaOverride": null,
  "connectionParams": [
    {"key": "NUMBER_PROVIDER",
      "value": ʺʺ,
      "displayName": ʺʺ,
      "description": "",
      "visibility": "internal" },
    {
      "key": "PHONE_NUMBER",
      "value": "REDACTED",
      "displayName": "Phone number",
      "description": "",
      "visibility": "public" },
    {
      "key": "NUMBER ID",
      "value": "618c92d9-4685-445a-8b63-e45797c0ad0f',
      "displayName": "Number ID",
      "description": "",
      "visibility": "internal" },
    {"key": "DELIVERY REPORT PATH",
      "value": "/sms-messagebird/4f9171a4-a856-4bdf-9219-283e1939f99c",
      "displayName": ʺʺ,
      "description": "",
      "visibility": "internal" },
    {"key": "CUSTOMER ID",
      "value": "12045427",
      "displayName": ʺʺ,
      "description": "",
      "visibility": "internal" },
    {"key": "NUMBER_CAPABILITIES",
      "value": "voice-inbound,voice-outbound,sms-inbound,sms-outbound",
      "displayName": "Number capabilities",
      "description": "",
      "visibility": "internal" },
    {"key": "NUMBER_TYPE",
      "value": "mobile",
      "displayName": ʺʺ,
      "description": "",
      "visibility": "internal" },
    {"key": "NUMBER_COUNTRY",
      "value": "NL",
      "displayName": "",
      "description": "",
      "visibility": "internal" } ],
  "settings": [],
  "preferences": {
    "disableProfileFetching": false },
  "capabilities": {
    "messaging": {
      "displayName": "Messaging capabilities",
      "status": "active",
      "paused": false,
      "name": "messaging",
      "version": 0,
      "createdAt": "2023-06-30T09:08:50.104Z",
      "updatedAt": "2023-06-30T09:08:50.104Z",
      "outgoing": {
         "displayName": "Capability to send outgoing messages",
         "status": "active",
         "paused": false,
         "name": "messaging.outgoing",
         "version": 0,
         "createdAt": "2023-06-30T09:08:50.104Z",
         "updatedAt": "2023-06-30T09:08:50.104Z",
         "mms": {
           "displayName": "Capability to send outgoing mms messages",
           "status": "inactive",
           "paused": false,
           "name": "messaging.outgoing.mms",
           "version": 1,
           "createdAt": "2023-07-19T10:01:12.722Z",
           "updatedAt": "2023-07-26T10:35:56.219Z" },
         "media": {
           "textFallback": {
             "displayName": "Capability to fallback to text when unable to send media message",
             "status": "active",
             "paused": false,
             "name": "messaging.outgoing.media.textFallback",
             "version": 0,
             "createdAt": "2023-08-17T08:55:40.395Z",
             "updatedAt": "2023-08-17T08:55:40.395Z" } } },
      "incoming": {
         "displayName": "Capability to receive messages",
         "status": "active",
         "paused": false,
         "name": "messaging.incoming",
         "version": 0,
         "createdAt": "2023-06-30T09:08:50.104Z",
         "updatedAt": "2023-06-30T09:08:50.104Z",
         "mms": {
           "displayName": "Capability to receive mms messages",
           "status": "inactive",
           "paused": false,
           "name": "messaging.incoming.mms",
           "version": 1,
           "createdAt": "2023-07-19T10:01:12.722Z",
           "updatedAt": "2023-07-26T10:35:56.219Z" } } } },
  "createdAt": "2023-06-07T14:36:07.909Z",
  "updatedAt": "2023-08-22T14:20:40.888Z" } ...
```

Further information about message types is available in the published documents in the folder or path /api/channels-api/message-types of the subdomain "docs" of the internet domain "messagebird.com".

In an embodiment, the Channels API surfaces a number of relevant events during the messaging lifecycle. Using channel triggers in flow processing, a user application can listen to these events, to take action or send a webhook back to an endpoint. Examples of trigger events include: New message received; Before outgoing message processing; Before incoming message processing; Message successfully sent; Message sending failed; Message delivered; Message delivery failed.

In an embodiment, the Channels API surfaces events in response to user actions on a message. The type and number of events will vary depending on data that is available from different supported platforms. Examples of possible events arising from user actions include read, opened, clicked, reported-as-spam, unsubscribe-request, and delete-request. In some embodiments, the Channels API implements a method, associated with a specified endpoint, that a program can query to check whether a particular message received any interactions.

### 2.2 MESSAGE STATES AND FLOW PROCESSING

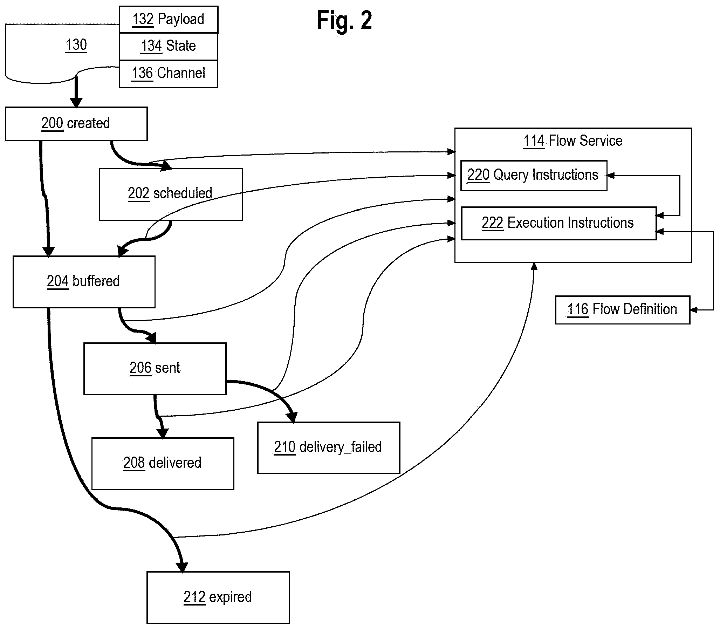

FIG. 2 illustrates data flow relationships between a plurality of different message states. FIG. 2 and each other flow diagram herein are intended as an illustration of the functional level at which skilled persons, in the art to which this disclosure pertains, communicate with one another to describe and implement algorithms using programming. The flow diagrams are not intended to illustrate every instruction, method, object, or sub-step that would be needed to program every aspect of a working program, but are provided at the same functional level of illustration that is normally used at the high level of skill in this art to communicate the basis of developing working programs.

In an embodiment, as detailed in other sections, the operation of the message execution unit 118 in response to calls from application server 104 results in creating one or more messages 130 based on a message body or template referenced in an API call. Each message 130 comprises a digital object or data structure that is digitally stored in the main memory of the message application processor 110 and can be transiently stored in database 140. Each message 130 comprises a plurality of digitally stored attribute values including but not limited to a payload 132, state 134, and channel 136; the payload may be termed a body and can comprise a plurality of other values, and the state may be termed a status value, and the channel may be an identifier of one of the channels 120, 122, 124. A message object, in one embodiment, can comprise a message object identifier; a reference such as a URL of the object; a direction value specifying sent or received; a type value specifying SMS, binary, flash, etc.; an originator identifier; reference value; a reporting URL for status reporting; a validity value specifying a period of message validity; a gateway route identifier; a string payload; a message class value; a scheduled date/time value; a created date/time value; a hashmap of recipient information. In an embodiment, the recipient information can comprise an array specifying a count, status values, and items for each of a plurality of recipients.

Status values can correspond to state values. In an embodiment, the message 130 progresses through two or more states as shown in FIG. 2, and states can include but are not limited to a created state 200, scheduled state 202, buffered state 204, sent state 206, delivered state 208, delivery failed state 210, and expired state 212. Other embodiments can define more or fewer states.

In some embodiments, each of the states of FIG. 2 also is associated, in message 130, with a status reason value or code that can specify details about the message status. In one embodiment, values of the status reason or code can include: successfully delivered, pending delivery report or receipt (DLR), DLR not received, unknown subscriber, unavailable subscriber, expired, opted out, received network error, insufficient balance, carrier rejected, capacity limit reached and generic delivery failure.

In an embodiment, at any of the created state 200, scheduled state 202, buffered state 204, sent state 206, delivered state 208, delivery failed state 210, and expired state 212, or at a state transition, the flow service can be invoked under control of the message originator. In some embodiments, the flow service implements a hook management API, which the developer computer 102 can use to create a hook between two states and to reference a particular flow definition to run based on its flow identifier. In FIG. 2, arrows that link one state to another state represent state transitions, and arrows linking the flow service to other arrows represent hooks to state transitions.

Optionally, in one embodiment, the flow service is programmed with query instructions 220 and execution instructions 222. The query instructions 220 are programmed to determine whether a flow definition is stored in the database 140 or in memory or otherwise available based upon a then-current context of the message 130 and the particular state or transition that occurred. If a flow definition exists that matches the current context, then the flow definition is accessed or retrieved and evaluated, using execution instructions 222, based on the message 130, payload 132, state 134, channel 136, and other attributes of the message. Thus, in an embodiment, each of the states 200 to 212, inclusive, is capable of triggering an invocation of the flow service and evaluation of a flow definition to execute or use rules or programmed logic of the flow definition to act on the message 130 or to call an external service.

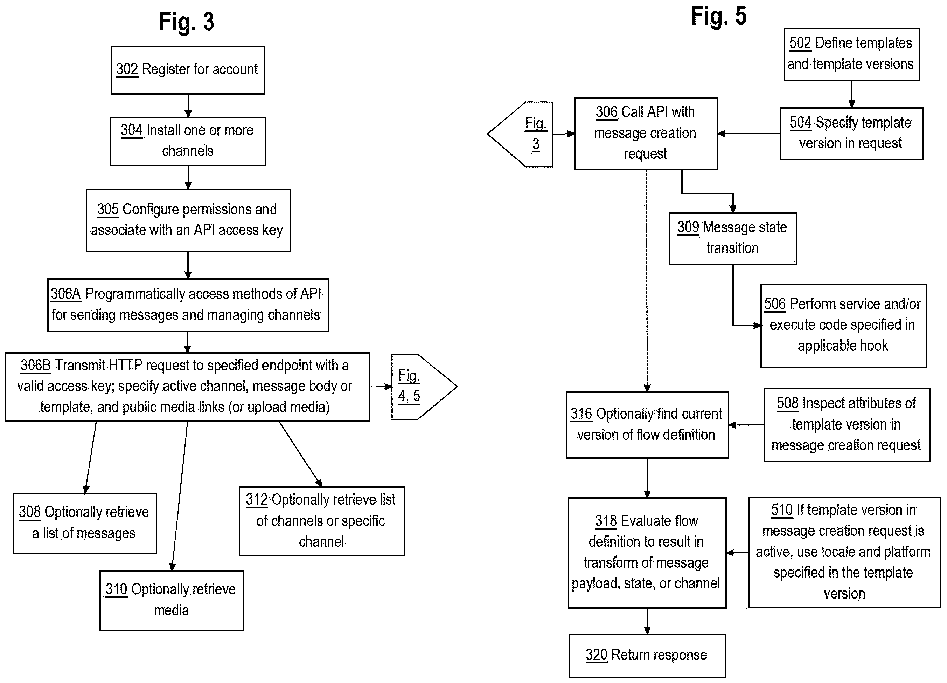

FIG. 3 illustrates an example process flow that can be programmed to implement the enrollment of enterprises or users in a message processing system. As noted above in connection with FIG. 1, in an embodiment, API 114 implements the methods and functions for an omnichannel messaging solution to allow users to send and receive messages to multiple different messaging services including but not limited to SMS, Email and WhatsApp. To start using the API 114, in an embodiment, user computer 106 registers for an account at block 302 and installs one or more channels at block 304. A channel, in this context, typically corresponds to a messaging platform such as WHATSAPP, SMS, FACEBOOK MESSENGER, INSTAGRAM MESSAGING, e-mail, etc., and is represented in a set of data that the message application processor manages in database 140. Thus, "channel" can refer both to an external messaging service or platform, and the collection of data that the message application processor 110 manages to allow application 105, messages 130, and other elements to request and use the service or platform. Installing a channel can comprise using a browser to log into a user account and interacting with a channel marketplace using a set of GUI pages that facilitate finding, viewing information about, and installing one or more instances of one or more channels. Installation can comprise the application server 104 updating an account associated with the user or enterprise to associate one or more channels such as messaging channel 124 with the user account.

At block 305, the process comprises configuring permissions and associating the permissions with an API access key. In an embodiment, to manage channels or send messages via the API, an API access key is associated with one or more permissions to carry out specified actions. In response to receiving an API call, each method of the API is programmed to call a permissions service to retrieve the permissions that are associated with an API key presented in the call and to determine whether the key is associated with a sufficient level of permissions to carry out the actions specified in the call. In an embodiment, permissions can be organized in sets or levels termed access policies; for example, a Channel Viewer access policy might include permissions to list channels, get a specific channel, get all messages for a channel, and so forth. Message senders could be associated with an access policy that allows requests to create new messages and to upload media. Updating channel settings could be associated with other permissions. Each access policy can be defined in a database record that includes a name, policy description, and a definition. The definition can specify an effect, such as ALLOW; an action, such as CREATE; and one or more resources to which the effect and action apply. The result of block 305 is that one or more access profiles are created and stored, for example, in database 140, and one or more access profiles are associated with an API key value. In this manner, presenting the API key value with a call from application 105 to API 114 allows the API to validate the key value, determine what permissions exist in an access profile that is associated with the key value, and determine whether those permissions authorize the call.

At block 306A, a user or enterprise program can programmatically call methods or functions of the API for sending messages and managing channels. For example, application 105 can transmit an API call via parameterized HTTP to API 114. As shown in block 306B, the call can include an access key, a channel that was previously installed and thus is active, a message body or template, and public media links or references to upload media.

At block 308, asynchronously with respect to blocks 306A, 306B, an API call can retrieve a list of messages that have been sent or are undergoing processing. At block 310, asynchronously with respect to block 306A, 306B, an API call can retrieve media that have been previously uploaded. At block 312, asynchronously with respect to block 306A, 306B, an API call can retrieve a list of active channels or data relating to a specific channel.

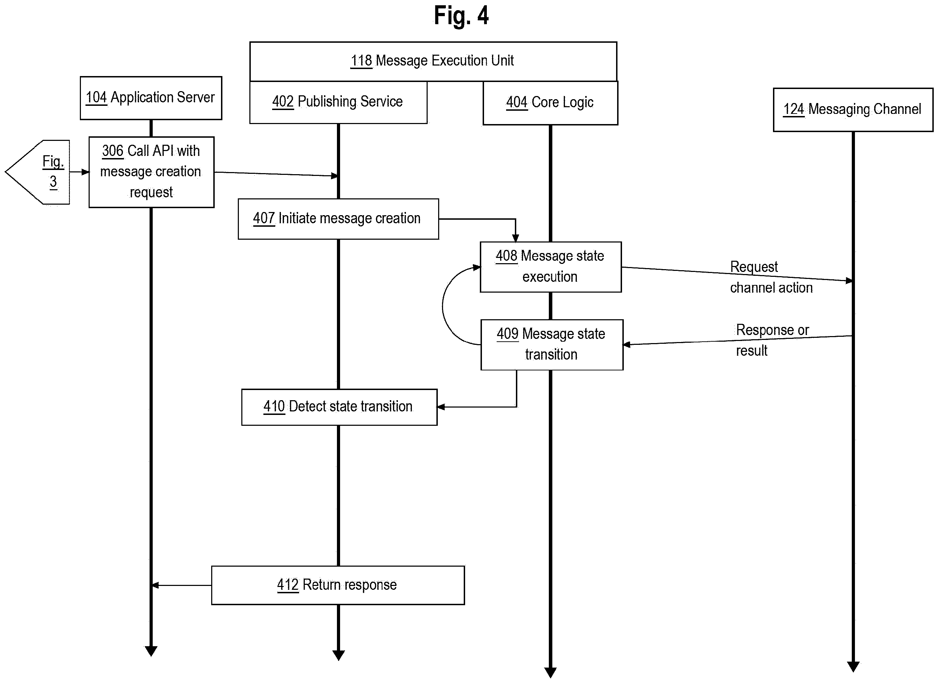

FIG. 4, FIG. 5 illustrate examples of message processing at the message application processor 110 after block 306A, block 306B. Referring first to FIG. 4, a message flow diagram illustrates an example interaction of different functional elements of FIG. 1 as messages are created and transmitted. In some embodiments, the functional execution of message execution unit 118 can be divided among a publishing service 402 and core logic 404, which can represent functionally independent sets of instructions within the message application processor 110. In this example, the publishing service 402 is responsible for initiating message creation, initiating flow hook lookups, and other interfacing between the application server 104 and the core logic 404. However, in other embodiments, any service of the message application processor 110 can act in the same manner as the publishing service 402, such as a conversations service, voice call service, or voice messaging service. Each service can execute an independent evaluation of the hook lookup and evaluation functions.

FIG. 4 shows a process flow that initiates execution by using a message application processor for receiving a first request from a separate application server computer executing a particular computer program application to create and send an electronic message. In an embodiment, as shown at block 306, application server 104 executes the application 105 which, in the ordinary course of execution, calls the API 112 of message application processor 110 and provides a message creation request or calls the Channels API 114 with a request. The call of block 306 could occur at any step in the execution of the host application at which a message processing function is required or useful. The particular position of the call in a logical flow of the application will vary based upon the particular application that the application server 104 hosts or runs. In some embodiments, the request comprises a template version identifier, the template version identifier being associated in a database with a previously defined template that associates a locale value and a platform value, and the request specifies a location value corresponding to a geographic location of a recipient of the message.

In response to the call of block 306, APIs 112, 114 can be programmed to signal message execution unit 118 that a call has been received specifying creating a message. In further response, the message execution unit 118 can programmatically call the publishing service 402 to process the request. FIG. 3 can continue with, in response to the request, the message application processor creating the message and assigning a status value to the message, the status value being associated with the first state of the message. The publishing service 402 then initiates creating a message, at block 407, destined for a particular messaging channel 124 that has been specified or referenced in the call of block 306. The publishing service 402 can represent or include an originator process, agent, or thread that the publishing service instantiates or creates for each application server 104, application, or user session. Block 407 can comprise using a channel-specific program method to transform a message body in the request, or a template specified in the API call, to a channel-specific formatted or rendered copy of the message. The manner of formatting a message body or template for use with a particular channel will depend on the transmitting capabilities of the messaging channel 124 and/or the rendering or display capabilities of client applications or apps that work with that channel.

Assume that a message object like message 130 (FIG. 2) is created in memory and the status value of the message object is set to the created state 200 and then the buffered state 204. At block 408, the core logic 404 executes instructions associated with the buffered state 204, and requests the messaging channel 124 to dispatch the message. Depending on the configuration and operation of the messaging channel 124, at some later time, a response or result is transmitted back to the core logic 404, resulting in a message state transition at block 409. Thus, FIG. 3 comprises the message application processor causing the message to transition to a second state. In some embodiments, message application processor 110 implements a distributed state machine in which multiple different back-end services are programmed to assign states to a message depending on the then-current logical position of the message in a message flow or lifecycle, and FIG. 4 represents a simplified view of state assignment. The message application processor 110 implements the state machine, rather than the application server 104 or an application that it hosts.

At operation 410, the publishing service 402 detects the message state transition 409. In one embodiment, to detect message state transitions, the publishing service 402 subscribes to an event bus on which the core logic 404 publishes all message state transitions. This approach places the processing burden of handling a large number of messages and message state transitions on the message originator, such as publishing service 402 or its threads or agents, rather than on the core logic 404, thereby enabling the message originator to use context data to determine what action to take when a particular state transition occurs.

Optionally, FIG. 4 can continue with the message application processor performing a flow hook lookup to determine whether a flow definition is associated with the transition from the first state to the second state and with the particular computer program application, and in response thereto, evaluating the flow definition based on the message to result in executing an operation specified in the flow definition using one or more of a payload of the message, the status value, or a channel identifier of the message. In an embodiment, the publishing service at block 302 conducts a context-based flow hook lookup to determine, from main memory or persistent storage such as database 140, whether a flow definition exists given the then-current context of the message. Context data such as message state, status reason, and any other attribute of the message 130 or message object can be used to determine whether to look up a flow hook. Or, the application server 104 can specify context data in the call of operation 406, and that context data can be used to determine whether a flow hook lookup should occur.

If the context data results in a programmatic decision to conduct a flow hook lookup, the system invokes the flow service with a request to find a current version of a flow definition. The operation inspects memory or persistent storage for a hook, link, reference, or pointer to a current version of a flow definition and, if found, the flow definition is loaded. The flow service then evaluates the flow definition based on message 130 and all attribute values of the message or message object. As a result, the flow definition can cause one or more transformations of the message payload, message state, or message channel. Specific kinds of transformations and operations are described herein in other sections. In various embodiments, an operation in the flow definition can be programmed for specifying a transformation of the message from a first payload value to a second payload value, specifying a transformation of the status value to a third state, specifying a transformation of the channel identifier to specify a different particular communication channel among the plurality of different communication channels, specifying a fetch of a plurality of data values from a specified network location, with FIG. 4 further comprising, in response to executing the fetch, storing the plurality of data values in a corresponding plurality of program variables in main memory of the message application processor, or specifying an HTTP request to a specified network location. Or, the operation in the flow definition can specify a plurality of machine executable instructions in a programming language capable of interpretation or in script code. Examples include PYTHON, LUA, RUBY, JAVASCRIPT, and PHP.

In some embodiments, the flow service can implement logging to track all message transformations, and block 318 can be programmed to write a record to a log file specifying what transformations occurred at the operation. The flow service can implement a log file query operation that the developer computer 102 can access to view the contents of message flow logs. Therefore, the developer computer 102 can see the transition of a message over time for analytical purposes including message campaign analysis, what conditions triggered which changes in state and in what amount, and so forth.

The flow service returns a response that comprises returning a message object if the evaluation of the flow definition was successful, and an error object if the evaluation failed. Or, a response indicates success, failure, or a new payload, with a reference to the previous payload. The publishing service 402 can return a commensurate response specifying whether the call succeeded or failed. Each response can include response codes or payloads with detailed explanations of the success or failure.

Core logic 404 can be viewed as executing asynchronously with respect to publishing service 402 and application server 104. Therefore, message state execution at block 408 and message state transition at block 409 can occur in a separate thread independent of the execution of the other blocks and process flows shown in FIG. 4. In this manner, messages can transition between the first state and the second state as two states among a plurality of different possible states of a state machine that the message application processor implements to process the message. In some embodiments, the different possible states of a message are: created, scheduled, buffered, sent, delivered, delivery failure, and expired.

In some cases, message state execution at block 408 comprises the message application processor selecting, based on the channel identifier, a particular communication channel among a plurality of different communication channels, and transmitting a request to the particular communication channel to transmit the message using the particular communication channel. Such a request can occur in the first iteration of FIG. 3, or in subsequent iterations of blocks 408, 409, and so forth. Or, in an embodiment, message state execution at block 408 comprises the message application processor selecting, based on the platform value and locale value of the template corresponding to the template version identifier, and the location value of the recipient, a particular communication channel among a plurality of different communication channels, and transmitting a request to the particular communication channel to transmit the message using the particular communication channel.

With the foregoing process, the developer computer 102, application server 104, and/or an enterprise or customer with which they are associated can access programmatic means to hook into and manipulate the states of a message during processing by the message application processor 110, including causing the execution of any desired logic between the states, and to change the states. Further, a channel can be selected based on the geographic location of a recipient so that different communication channels are invoked, called, or used for recipients in different geographies around the globe, within a continent, or within a region or unit of a continent.

### 2.3 PRACTICAL APPLICATIONS

The embodiments of this disclosure can be applied to many practical situations of data processing, communications, or interoperation with other systems. A flow can specify forwarding an SMS message to email, causing creating and sending an email when an application receives a new SMS message. A flow can specify creating voice-based menus for an interactive voice response system. Abandoned cart engagement can be achieved by sending text messages to customers who left items in an online shopping cart. Automated responses in customer support SMS workflows can be defined.

As another example, engaging user experiences based on data can be created. The developer computer 102 can specify a trigger condition, such as an incoming message or a new order on the application server 104. The developer computer 102 can add steps to conduct language detection, route messages, and make relevant API calls. Different programmatic interactions across communication channels can define a specific customer path or experience. The developer computer 102 can design logic to route data and update application server 104 to reflect the latest updates from customer communications. Other embodiments can create more meaningful customer interactions on the platforms that customers know and use; for example, a flow can define how to complete sign-up forms via WhatsApp, exchange rich media on Messenger, enable orders via SMS, or schedule appointments on WeChat.

In other embodiments, flows can build data pipelines. Flows can empower a contact center with information from a CRM system, build pipelines for marketing campaigns, or centralize context from support software. Flows can move data between third party sources like Point of Sale Systems (POS), CRMs, fulfillment providers, order processing systems and more. Flows can connect data cross-functionally, by creating data pipelines across various sales, marketing, and support tools. Flows may be able to determine the preferred language and communication channel of customers, for updating a customer profile.

It will be apparent that flow definition 116 can specify many useful actions in response to specific message content, states, or state transitions. For example, a flow definition can implement content moderation. The flow definition can be programmed to determine that a message 130 (FIG. 2) contains profanity, and in response, to change the value of state 134 from the created state 200 immediately to the delivery failed state 210, without transitioning to the scheduled state 202 or buffered state 204.

Or, after creating the message 130, the application server 104 may need to generate a unique code to be attached to the message, such as a two-factor authentication code. In one embodiment, application server 104 can call a Post Messages function of the API 112, provide a customer ID associated with developer computer 102 or the application server, and generate a 4-digit or 6-digit code; the flow definition also could inject arbitrary content into the message 130 to explain the code. In another example, a flow definition could implement A/B testing in which the application server 104 requests a particular message 130, but the flow definition specifies, after the created state 200, to transform the message payload using one of two alternatives.

A flow definition also can be programmed to implement templating and localization. The application server 104 could be programmed to output content for a message 130 in English, but a flow definition could specify, after the created state 200 or scheduled state 202, to trigger a transformation of the text to Dutch or another language; after the flow concludes, a transition to the buffered state 204 could occur, causing sending the message in Dutch.

In a further example, the flow definition is configured to cause replaying of a message over another channel. For example, assume that the messaging channels 120, 122, 124 operate with servers, owners, or operators in different countries and impose different per-message rates based on location. The application server 104 could be programmed to use a first messaging channel 120 by default but, in response to detecting that the user computer 106 is located in a particular country, to switch to a different messaging channel 122 with a better cost structure. A particular example could be switching from SMS to WHATSAPP because WHATSAPP offers better delivery rates in some countries. In this case, the flow definition could specify sending messages over WHATSAPP and switching to SMS in response to the delivery failed state 210 or another state associated with determining that the customer does not have a WHATSAPP number.

In yet another example, the flow definition could specify using a push notification or web sockets notification. For example, if application server 104 implements a mobile application and the user computer 106 is a mobile computing device, the flow definition could specify concurrently creating a message and transmitting it over a web socket channel, and calling back to the application server to request sending an in-app notification.

In all these examples, the disclosure provides the key benefit that the developer computer 102 and/or an owner or operator of the application server 104 does not need to implement their own messaging application, using SMS or any other channel. Instead, the message application processor 110 is programmed for interfacing and integrating with a plurality of different messaging channels, and the owner or operator merely needs to specify workflow operations across multiple channels using a flexible flow definition process. Without changing the application server 104 or the applications that it hosts, the owner or operator can operate a service that can switch channels among SMS, WHATSAPP, or others to change application behavior via state injection in the messaging flow.

### 3. IMPLEMENTATION EXAMPLE - CHANNELS, TEMPLATES, APPLICATION PROGRAMMING INTERFACE (API) DEFINITION

In one embodiment, users of the flow definition processes described in section 2 can define and populate configuration templates that specify instructions for message processing across multiple different channels having substantially different parameter and processing requirements, including image processing, localization, variable passing, and invocation of approval processes; users also can define and include channel-specific logic.

Further information about calls, data inputs, and data outputs for a complete implementation of an application programming interface for defining channels and managing channels and platforms in a large-scale messaging system is available in the published documents in the folder or path /api/channels-api/ of the subdomain "docs" of the internet domain "messagebird.com". Calls to the API can occur at block 306 (FIG. 3) to invoke and use a particular template as part of creating a message. Thereafter, message application processor 110 is programmed to automatically dispatch the message, as part of executing the flow of FIG. 3, on the channel specified in the template when other attributes of a message match the attributes of the template, such as locale.

In an embodiment, a "workspace" is a customer instance or user instance in which different messaging techniques can be defined and then used. Platforms provide messaging capabilities; examples of platforms are SMS; MMS; e-mail; WHATSAPP; FACEBOOK MESSENGER; WEIXIN/WECHAT; QQ; TELEGRAM; SNAPCHAT; SLACK; SIGNAL; SKYPE; DISCORD; VIBER. Channels are the installation of a platform for a workspace; thus, for the corporation, enterprise, or organization named "ALPHA MOTOR COMPANY," the channelId "ALPHA TEXT 1" could refer to SMS as used by Alpha for customer communications. Messages are the data sent and received through channels. Hooks are programmatic constructs that detect and react to events in channels, and can embody user-created program code that executes in response to a particular event occurring in a channel. An example could be detecting a responsive message STOP from a customer on the SMS channel.

With templates, the body of a message object can specify properties of media such as message text, image, file, location, carousel, list, section, and a template; flow processing then will dispatch the associated message media using the channel(s) specified in the template, and process any hooks and associated code that are defined as part of the template. In this manner, embodiments provide completely flexible means for users or customers of a large-scale messaging platform to define and reuse sets of communication parameters for different combinations of platforms, channels, messages, and hooks.

One or more templates 602 can be created and stored in database 140 using flat files, files in an online code repository like GitHub, or a GUI-based editor. The flow service can ingest and use any of the one or more templates 602 based on API calls specified in a flow. While the term "template" is used herein such as for template 602, embodiments can be programmed to interoperate with multiple different versions of a particular template.

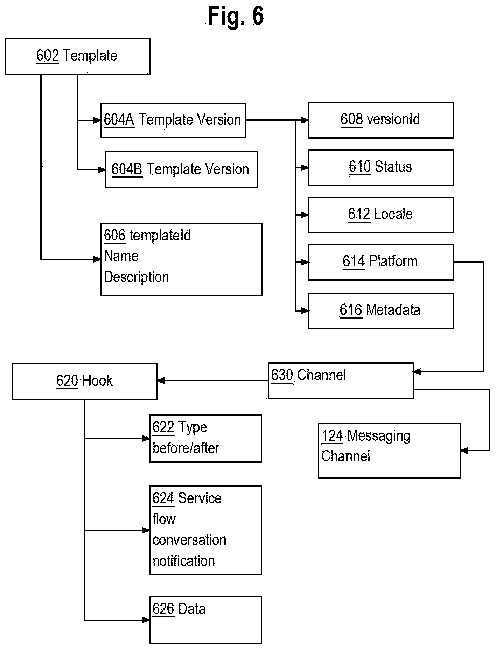

FIG. 6 illustrates an example of the logical data structure of a template, in one embodiment. The logical structure of templates and template versions of FIG. 6 can be implemented using object-oriented programming languages that support class definition and class inheritance, structured data definitions like JSON, or functionally similar programming approaches. In an embodiment, a template 602 comprises one or more template versions 604A, 604B, an identifier such as templateId 606, and one or more other metadata elements such as a name and description. Each template version 604A, 604B comprises aversion identifier 608, a status value 610, a locale value 612, a platform value 614, and one or more metadata values 616.

In an embodiment, the version identifier 608 comprises a string or numeric value that uniquely identifies a template. The status value 610 specifies whether the template version is active or inactive; a message creation request (block 306, FIG. 3) that specifies a template version with an inactive value will cause the message execution unit 118 to return an error message. The locale value 612 specifies a label of a country, region, or other geographic value for which the template version applies. In some embodiments, locale value 612 specifies a two-letter ISO country code value and the template version is effective only for messages dispatched to end users who are known to be within the specified country. In other embodiments, the locale value can comprise a label that resolves, using a separately called location method, to one or more geographies such as counties, states, country codes, or other values. The platform value 614 specifies an identifier of a platform, from among one of those previously specified, which can correspond to a channel 630 by which the platform has been associated with or linked to a workspace. A channel 630, when used, can result in dispatching messages on messaging channels 120, 122, 124, as previously described in connection with FIG. 3. The metadata values 616 can comprise a creation date and an update date.

One or more hooks 620 can be registered with a channel 630. Registration can comprise programmatically creating a record in database 140 that points, maps, or otherwise logically associates a hook 620 with a channel 630. When one or more hooks 620 are registered, message execution unit 118 is programmed, in response to detecting an event via a channel 630, to inspect which hooks are registered and listen to the specified event, and to invoke a service or data specified in the hook. In an embodiment, a hook is defined by or comprises a type value 622, a service value 624, and a data value 626. In an embodiment, the type value 622 can specify whether the service and data are processed before or after the event is otherwise processed. The service value 624 can specify a flow (FIG. 3), a conversation, or a notification to transmit. The data value 626 can comprise or define script code that message execution unit 118 executes automatically when the hook is invoked.

FIG. 5 illustrates elements of the process of FIG. 3 that can be programmed to process and use templates and hooks as defined herein. At block 502, one or more templates and template versions are defined, created, and stored, for example, in the database 140 (FIG. 1). The API defined herein, a text editor, or other tools can be used to create and store JSON files, YAML files, or other structured definitions of the templates and template versions. At block 504, as part of the API call of block 306 (FIG. 3), a template version is specified in the message creation request.

At block 506, the message execution unit 118 is programmed to perform the service specified in an applicable hook, and/or execute code or data specified in an applicable hook, as part of message state transition at block 309. The combination of block 309, block 506 effectively provides for detection of events on channels and responses to specified events based on applicable, active hooks that have been previously registered for those channels and events.

At block 316, the process of FIG. 3 is programmed to find a current version of a flow definition. As part of block 316, the message execution unit 118 can be programmed at block 508 to inspect attributes of a template version in a message creation request, to enable an applicable template and template version to influence the transformation of a message or dispatch on a particular channel for a particular locale. At block 318, the process of FIG. 3 is programmed to evaluate a flow definition to result in the transformation of a message payload, state, or channel, as described above. At block 510, if the template version in the message creation request has an active status value, then the locale and platform specified in the template are used as part of the transformation in block 318. Control then transfers to block 320 and processing continues as specified in FIG. 3. Examples of calls and their functions to support the creation of templates for channels are shown in the published documentation identified above. In an embodiment, a "components:" section defines parameters, responses, data schemas, and other elements. A "parameters:" subsection specifies the name, description, input location, required status, and data type of all data parameters that can be used in the API calls. The "responses" subsection defines kinds of error responses that the API can return. The "schemas:" subsection defines valid data types and their attributes. Among these, a "MessageJsonSchema" section defines how responses can be returned in structured JSON formats, but many other data elements such as channels also are defined.

### 4. IMPLEMENTATION EXAMPLE - HARDWARE OVERVIEW

According to one embodiment, the techniques described herein are implemented by at least one computing device. The techniques may be implemented in whole or in part using a combination of at least one server computer and/or other computing devices that are coupled using a network, such as a packet data network. The computing devices may be hard-wired to perform the techniques, or may include digital electronic devices such as at least one application-specific integrated circuit (ASIC) or field programmable gate array (FPGA) that is persistently programmed to perform the techniques, or may include at least one general purpose hardware processor programmed to perform the techniques pursuant to program instructions in firmware, memory, other storage, or a combination. Such computing devices may also combine custom hard-wired logic, ASICs, or FPGAs with custom programming to accomplish the described techniques. The computing devices may be server computers, workstations, personal computers, portable computer systems, handheld devices, mobile computing devices, wearable devices, body mounted or implantable devices, smartphones, smart appliances, internetworking devices, autonomous or semi-autonomous devices such as robots or unmanned ground or aerial vehicles, any other electronic device that incorporates hard-wired and/or program logic to implement the described techniques, one or more virtual computing machines or instances in a data center, and/or a network of server computers and/or personal computers.

FIG. 7 is a block diagram that illustrates an example computer system with which an embodiment may be implemented. In the example of FIG. 7, a computer system 700 and instructions for implementing the disclosed technologies in hardware, software, or a combination of hardware and software, are represented schematically, for example as boxes and circles, at the same level of detail that is commonly used by persons of ordinary skill in the art to which this disclosure pertains for communicating about computer architecture and computer systems implementations.

Computer system 700 includes an input/output (I/O) subsystem 702 which may include a bus and/or other communication mechanism(s) for communicating information and/or instructions between the components of the computer system 700 over electronic signal paths. The I/O subsystem 702 may include an I/O controller, a memory controller and at least one I/O port. The electronic signal paths are represented schematically in the drawings, for example as lines, unidirectional arrows, or bidirectional arrows.

At least one hardware processor 704 is coupled to I/O subsystem 702 for processing information and instructions. Hardware processor 704 may include, for example, a general-purpose microprocessor or microcontroller and/or a special-purpose microprocessor such as an embedded system, a graphics processing unit (GPU), or a digital signal processor or ARM processor. Processor 704 may comprise an integrated arithmetic logic unit (ALU) or may be coupled to a separate ALU.

Computer system 700 includes one or more units of memory 706, such as a main memory, which is coupled to I/O subsystem 702 for electronically digitally storing data and instructions to be executed by processor 704. Memory 706 may include volatile memory such as various forms of random-access memory (RAM) or other dynamic storage device. Memory 706 also may be used for storing temporary variables or other intermediate information during execution of instructions to be executed by processor 704. Such instructions, when stored in non-transitory computer-readable storage media accessible to processor 704, can render computer system 700 into a special-purpose machine that is customized to perform the operations specified in the instructions.

Computer system 700 further includes non-volatile memory such as read only memory (ROM) 708 or other static storage device coupled to I/O subsystem 702 for storing information and instructions for processor 704. The ROM 708 may include various forms of programmable ROM (PROM) such as erasable PROM (EPROM) or electrically erasable PROM (EEPROM). A unit of persistent storage 710 may include various forms of non-volatile RAM (NVRAM), such as FLASH memory, or solid-state storage, magnetic disk or optical disk such as CD-ROM or DVD-ROM and may be coupled to I/O subsystem 702 for storing information and instructions. Storage 710 is an example of a non-transitory computer-readable medium that may be used to store instructions and data which when executed by the processor 704 cause performing computer-implemented methods to execute the techniques herein.

The instructions in memory 706, ROM 708 or storage 710 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to parse or render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. The instructions may implement a web server, web application server or web client. The instructions may be organized as a presentation layer, application layer and data storage layer such as a relational database system using structured query language (SQL) or no SQL, an object store, a graph database, a flat file system or other data storage.

Computer system 700 may be coupled via I/O subsystem 702 to at least one output device 712. In one embodiment, output device 712 is a digital computer display. Examples of a display that may be used in various embodiments include a touch screen display or a light-emitting diode (LED) display or a liquid crystal display (LCD) or an e-paper display. Computer system 700 may include other type(s) of output devices 712, alternatively or in addition to a display device. Examples of other output devices 712 include printers, ticket printers, plotters, projectors, sound cards or video cards, speakers, buzzers or piezoelectric devices or other audible devices, lamps or LED or LCD indicators, haptic devices, actuators or servos.

At least one input device 714 is coupled to I/O subsystem 702 for communicating signals, data, command selections or gestures to processor 704. Examples of input devices 714 include touch screens, microphones, still and video digital cameras, alphanumeric and other keys, keypads, keyboards, graphics tablets, image scanners, joysticks, clocks, switches, buttons, dials, slides, and/or various types of sensors such as force sensors, motion sensors, heat sensors, accelerometers, gyroscopes, and inertial measurement unit (IMU) sensors and/or various types of transceivers such as wireless, such as cellular or Wi-Fi, radio frequency (RF) or infrared (IR) transceivers and Global Positioning System (GPS) transceivers.

Another type of input device is a control device 716, which may perform cursor control or other automated control functions such as navigation in a graphical interface on a display screen, alternatively or in addition to input functions. Control device 716 may be a touchpad, a mouse, a trackball, or cursor direction keys for communicating direction information and command selections to processor 704 and for controlling cursor movement on an output device 712 such as a display. The input device may have at least two degrees of freedom in two axes, a first axis (e.g., x) and a second axis (e.g., y), that allows the device to specify positions in a plane. Another type of input device is a wired, wireless, or optical control device such as a joystick, wand, console, steering wheel, pedal, gearshift mechanism or other type of control device. An input device 714 may include a combination of multiple different input devices, such as a video camera and a depth sensor.

In another embodiment, computer system 700 may comprise an Internet of things (IoT) device in which one or more of the output device 712, input device 714, and control device 716 are omitted. Or, in such an embodiment, the input device 714 may comprise one or more cameras, motion detectors, thermometers, microphones, seismic detectors, other sensors or detectors, measurement devices or encoders and the output device 712 may comprise a special-purpose display such as a single-line LED or LCD display, one or more indicators, a display panel, a meter, a valve, a solenoid, an actuator or a servo.

When computer system 700 is a mobile computing device, input device 714 may comprise a global positioning system (GPS) receiver coupled to a GPS module that is capable of triangulating to a plurality of GPS satellites, determining and generating geo-location or position data such as latitude-longitude values for a geophysical location of the computer system 700. Output device 712 may include hardware, software, firmware and interfaces for generating position reporting packets, notifications, pulse or heartbeat signals, or other recurring data transmissions that specify a position of the computer system 700, alone or in combination with other application-specific data, directed toward host computer 724 or server computer 730.

Computer system 700 may implement the techniques described herein using customized hard-wired logic, at least one ASIC or FPGA, firmware, and/or program instructions or logic which when loaded and used or executed in combination with the computer system causes or programs the computer system to operate as a special-purpose machine. According to one embodiment, the techniques herein are performed by computer system 700 in response to processor 704 executing at least one sequence of at least one instruction contained in main memory 706. Such instructions may be read into main memory 706 from another storage medium, such as storage 710. Execution of the sequences of instructions contained in main memory 706 causes processor 704 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage 710. Volatile media includes dynamic memory, such as memory 706. Common forms of storage media include, for example, a hard disk, solid state drive, flash drive, magnetic data storage medium, any optical or physical data storage medium, memory chip, or the like.

Storage media is distinct from but may be used in conjunction with transmission media. Transmission media participates in transferring information between storage media. For example, transmission media includes coaxial cables, copper wire and fiber optics, including the wires that comprise a bus of I/O subsystem 702. Transmission media can also take the form of acoustic or light waves, such as those generated during radio-wave and infra-red data communications.

Various forms of media may be involved in carrying at least one sequence of at least one instruction to processor 704 for execution. For example, the instructions may initially be carried on a magnetic disk or solid-state drive of a remote computer. The remote computer can load the instructions into its dynamic memory and send the instructions over a communication link such as a fiber optic or coaxial cable or telephone line using a modem. A modem or router local to computer system 700 can receive the data on the communication link and convert the data to a format that can be read by computer system 700. For instance, a receiver such as a radio frequency antenna or an infrared detector can receive the data carried in a wireless or optical signal and appropriate circuitry can provide the data to I/O subsystem 702 such as place the data on a bus. I/O subsystem 702 carries the data to memory 706, from which processor 704 retrieves and executes the instructions. The instructions received by memory 706 may optionally be stored on storage 710 either before or after execution by processor 704.

Computer system 700 also includes a communication interface 718 coupled to I/O subsystem 702. Communication interface 718 provides a two-way data communication coupling to network link(s) 720 that are directly or indirectly connected to at least one communication networks, such as a network 722 or a public or private cloud on the Internet. For example, communication interface 718 may be an Ethernet networking interface, integrated-services digital network (ISDN) card, cable modem, satellite modem, or a modem to provide a data communication connection to a corresponding type of communications line, for example an Ethernet cable or a metal cable of any kind or a fiber-optic line or a telephone line. Network 722 broadly represents a local area network (LAN), wide-area network (WAN), campus network, internetwork or any combination thereof. Communication interface 718 may comprise a LAN card to provide a data communication connection to a compatible LAN, or a cellular radiotelephone interface that is wired to send or receive cellular data according to cellular radiotelephone wireless networking standards, or a satellite radio interface that is wired to send or receive digital data according to satellite wireless networking standards. In any such implementation, communication interface 718 sends and receives electrical, electromagnetic or optical signals over signal paths that carry digital data streams representing various types of information.

Network link 720 typically provides electrical, electromagnetic, or optical data communication directly or through at least one network to other data devices, using, for example, satellite, cellular, Wi-Fi, or BLUETOOTH technology. For example, network link 720 may provide a connection through a network 722 to a host computer 724.

Furthermore, network link 720 may provide a connection through network 722 or to other computing devices via internetworking devices and/or computers that are operated by an Internet Service Provider (ISP) 726. ISP 726 provides data communication services through a world-wide packet data communication network represented as internet 728. A server computer 730 may be coupled to internet 728. Server computer 730 broadly represents any computer, data center, virtual machine or virtual computing instance with or without a hypervisor, or computer executing a containerized program system such as DOCKER or KUBERNETES. Server computer 730 may represent an electronic digital service that is implemented using more than one computer or instance and that is accessed and used by transmitting web services requests, uniform resource locator (URL) strings with parameters in HTTP payloads, API calls, app services calls, or other service calls. Computer system 700 and server computer 730 may form elements of a distributed computing system that includes other computers, a processing cluster, server farm or other organization of computers that cooperate to perform tasks or execute applications or services. Server computer 730 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to parse or render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. Server computer 730 may comprise a web application server that hosts a presentation layer, application layer and data storage layer such as a relational database system using structured query language (SQL) or no SQL, an object store, a graph database, a flat file system or other data storage.

Computer system 700 can send messages and receive data and instructions, including program code, through the network(s), network link 720 and communication interface 718. In the Internet example, a server computer 730 might transmit a requested code for an application program through Internet 728, ISP 726, local network 722 and communication interface 718. The received code may be executed by processor 704 as it is received, and/or stored in storage 710, or other non-volatile storage for later execution.

The execution of instructions as described in this section may implement a process in the form of an instance of a computer program that is being executed, and consisting of program code and its current activity. Depending on the operating system (OS), a process may be made up of multiple threads of execution that execute instructions concurrently. In this context, a computer program is a passive collection of instructions, while a process may be the actual execution of those instructions. Several processes may be associated with the same program; for example, opening up several instances of the same program often means more than one process is being executed. Multitasking may be implemented to allow multiple processes to share processor 704. While each processor 704 or core of the processor executes a single task at a time, computer system 700 may be programmed to implement multitasking to allow each processor to switch between tasks that are being executed without having to wait for each task to finish. In an embodiment, switches may be performed when tasks perform input/output operations, when a task indicates that it can be switched, or on hardware interrupts. Time-sharing may be implemented to allow fast response for interactive user applications by rapidly performing context switches to provide the appearance of concurrent execution of multiple processes simultaneously. In an embodiment, for security and reliability, an operating system may prevent direct communication between independent processes, providing strictly mediated and controlled interprocess communication functionality.

In the foregoing specification, embodiments of the invention have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction.
The following are clauses pertaining to the invention:
1. A computer-implemented method, comprising:
   using a message application processor, receiving a first request from a separate application server computer executing a particular computer program application to create and cause sending a digital electronic message, the first request specifying a channel identifier corresponding to a particular communication channel among a plurality of different communication channels, a template version identifier, the template version identifier being associated in a database with a previously defined template that associates a locale value and a platform value, the request specifying a location value corresponding to a geographic location of a recipient of the message;
   in response to the first request, the message application processor creating the digital electronic message based on the previously defined template and assigning a status value to the message, the status value being associated with a first state of the message;
   the message application processor transitioning the message to a second state;
   the message application processor selecting, based on the platform value and locale value of the template corresponding to the template version identifier, the location value of the recipient, and the channel identifier, a particular communication channel among a plurality of different communication channels, and transmitting a request to the particular communication channel to transmit the message using the particular communication channel.
2. The computer-implemented method of clause 1, further comprising transformation of the message from a first payload value to a second payload value.
3. The computer-implemented method of clause 1, further comprising transformation of the status value to a third state.
4. The computer-implemented method of clause 1, the first request further comprising one or more media links, the computer-implemented method further comprising formatting the digital electronic message to include one or more media items that the media links reference.
5. The computer-implemented method of clause 1, the first request further comprising one or more media links, the computer-implemented method further comprising accessing the one or more media links, uploading one or more media items that the media links reference, and formatting the digital electronic message to include the one or more media items after the uploading.
6. The computer-implemented method of clause 1, further comprising receiving, from the separate application server computer executing the particular computer program application to create, a second request to install the particular communication channel among the plurality of different communication channels and, in response, updating a database record for an account associated with the separate application server computer to specify that the particular communication channel is active for the separate application server computer.
7. The computer-implemented method of clause 1, further comprising receiving, in the first request, an access key and in response:
   retrieving from a database an access profile that is associated in a database record with the access key;
   inspecting one or more permissions in the access profile;
   executing the creating, transitioning, and selecting only in response to determining that at least one permission among the one or more permissions authorizes processing messages for the particular communication channel.
8. The method of clause 1, the plurality of different communication channels comprising two or more of SMS; MMS; e-mail; WHATSAPP; FACEBOOK MESSENGER; WEIXIN/WECHAT; QQ; TELEGRAM; SNAPCHAT; SLACK; SIGNAL; SKYPE; DISCORD; VIBER.
9. The method of clause 1, the first state and the second state comprising two states among a plurality of different possible states of a state machine that the message application processor implements to process the message.
10. The method of clause 9, the different possible states comprising: created, scheduled, buffered, sent, delivered, delivery failure, expired.
11. The method of clause 9, an operation in a flow definition specifying a plurality of machine executable script code instructions.
12. One or more non-transitory computer-readable storage media storing one or more sequences of instructions which, when executed using one or more hardware processors of a message application processor cause the message application processor to perform:
   using a message application processor, receiving a first request from a separate application server computer executing a particular computer program application to create and cause sending a digital electronic message, the request specifying a channel identifier corresponding to a particular communication channel among a plurality of different communication channels, a template version identifier, the template version identifier being associated in a database with a previously defined template that associates a locale value and a platform value, the request specifying a location value corresponding to a geographic location of a recipient of the message;
   in response to the request, the message application processor creating the digital electronic message based on the previously defined template and assigning a status value to the message, the status value being associated with a first state of the message;
   the message application processor transitioning the message to a second state;
   the message application processor selecting, based on the platform value and locale value of the template corresponding to the template version identifier, the location value of the recipient, and the channel identifier, a particular communication channel among a plurality of different communication channels, and transmitting a request to the particular communication channel to transmit the message using the particular communication channel.
13. The one or more non-transitory computer-readable storage media of clause 12, further comprising sequences of instructions which, when executed using one or more hardware processors of the message application processor cause the message application processor to perform transformation of the message from a first payload value to a second payload value.
14. The one or more non-transitory computer-readable storage media of clause 12, further comprising sequences of instructions which, when executed using one or more hardware processors of the message application processor cause the message application processor to perform transformation of the status value to a third state.
15. The one or more non-transitory computer-readable storage media of clause 12, the first request further comprising one or more media links, the one or more non-transitory computer-readable storage media further comprising sequences of instructions which, when executed using one or more hardware processors of the message application processor cause the message application processor to perform formatting the digital electronic message to include one or more media items that the media links reference.
16. The one or more non-transitory computer-readable storage media of clause 12, the first request further comprising one or more media links, the one or more non-transitory computer-readable storage media further comprising sequences of instructions which, when executed using one or more hardware processors of the message application processor cause the message application processor to perform accessing the one or more media links, uploading one or more media items that the media links reference, and formatting the digital electronic message to include the one or more media items after the uploading.
17. The one or more non-transitory computer-readable storage media of clause 12, further comprising sequences of instructions which, when executed using one or more hardware processors of the message application processor cause the message application processor to perform receiving, from the separate application server computer executing the particular computer program application to create, a second request to install the particular communication channel among the plurality of different communication channels and, in response, updating a database record for an account associated with the separate application server computer to specify that the particular communication channel is active for the separate application server computer.
18. The one or more non-transitory computer-readable storage media of clause 12, further comprising sequences of instructions which, when executed using one or more hardware processors of the message application processor cause the message application processor to perform receiving, in the first request, an access key and in response:
   retrieving from a database an access profile that is associated in a database record with the access key;
   inspecting one or more permissions in the access profile;
   executing the creating, transitioning, and selecting only in response to determining that at least one permission among the one or more permissions authorizes processing messages for the particular communication channel.
19. The one or more non-transitory computer-readable storage media of clause 12, the plurality of different communication channels comprising two or more of SMS; MMS; e-mail; WHATSAPP; FACEBOOK MESSENGER; WEIXIN/WECHAT; QQ; TELEGRAM; SNAPCHAT; SLACK; SIGNAL; SKYPE; DISCORD; VIBER.
20. The one or more non-transitory computer-readable storage media of clause 12, the first state and the second state comprising two states among a plurality of different possible states of a state machine that the message application processor implements to process the message.
21. The one or more non-transitory computer-readable storage media of clause 20, the different possible states comprising: created, scheduled, buffered, sent, delivered, delivery failure, expired.
22. The one or more non-transitory computer-readable storage media of clause 20, the operation in a flow definition specifying a plurality of machine executable script code instructions.

## Claims

1. A computer-implemented method, comprising:
using a message application processor, receiving a first request from a separate application server computer executing a particular computer program application to create and cause sending a digital electronic message, the first request specifying a channel identifier corresponding to a particular communication channel among a plurality of different communication channels, a template version identifier, the template version identifier being associated in a database with a previously defined template that associates a locale value and a platform value, the request specifying a location value corresponding to a geographic location of a recipient of the message;
in response to the first request, the message application processor creating the digital electronic message based on the previously defined template and assigning a status value to the message, the status value being associated with a first state of the message;
the message application processor transitioning the message to a second state;
the message application processor selecting, based on the platform value and locale value of the template corresponding to the template version identifier, the location value of the recipient, and the channel identifier, a particular communication channel among a plurality of different communication channels, and transmitting a request to the particular communication channel to transmit the message using the particular communication channel.

2. The computer-implemented method of claim 1, further comprising transformation of the message from a first payload value to a second payload value.

3. The computer-implemented method of claim 1 or claim 2, further comprising transformation of the status value to a third state.

4. The computer-implemented method of any preceding claim, the first request further comprising one or more media links, the computer-implemented method further comprising formatting the digital electronic message to include one or more media items that the media links reference.

5. The computer-implemented method of any of claims 1 - 3, the first request further comprising one or more media links, the computer-implemented method further comprising accessing the one or more media links, uploading one or more media items that the media links reference, and formatting the digital electronic message to include the one or more media items after the uploading.

6. The computer-implemented method of any preceding claim, further comprising receiving, from the separate application server computer executing the particular computer program application to create, a second request to install the particular communication channel among the plurality of different communication channels and, in response, updating a database record for an account associated with the separate application server computer to specify that the particular communication channel is active for the separate application server computer.

7. The computer-implemented method of any preceding claim, further comprising receiving, in the first request, an access key and in response:
retrieving from a database an access profile that is associated in a database record with the access key;
inspecting one or more permissions in the access profile;
executing the creating, transitioning, and selecting only in response to determining that at least one permission among the one or more permissions authorizes processing messages for the particular communication channel;
and/or
the plurality of different communication channels comprising two or more of SMS; MMS; email; WHATSAPP; FACEBOOK MESSENGER; WEIXIN/WECHAT; QQ; TELEGRAM; SNAPCHAT; SLACK; SIGNAL; SKYPE; DISCORD; VIBER.

8. The method of any preceding claim, the first state and the second state comprising two states among a plurality of different possible states of a state machine that the message application processor implements to process the message;
wherein the different possible states may comprise: created, scheduled, buffered, sent, delivered, delivery failure, expired; and/or optionally
an operation in a flow definition specifies a plurality of machine executable script code instructions.

9. One or more non-transitory computer-readable storage media storing one or more sequences of instructions which, when executed using one or more hardware processors of a message application processor cause the message application processor to perform:
using a message application processor, receiving a first request from a separate application server computer executing a particular computer program application to create and cause sending a digital electronic message, the request specifying a channel identifier corresponding to a particular communication channel among a plurality of different communication channels, a template version identifier, the template version identifier being associated in a database with a previously defined template that associates a locale value and a platform value, the request specifying a location value corresponding to a geographic location of a recipient of the message;
in response to the request, the message application processor creating the digital electronic message based on the previously defined template and assigning a status value to the message, the status value being associated with a first state of the message;
the message application processor transitioning the message to a second state;
the message application processor selecting, based on the platform value and locale value of the template corresponding to the template version identifier, the location value of the recipient, and the channel identifier, a particular communication channel among a plurality of different communication channels, and transmitting a request to the particular communication channel to transmit the message using the particular communication channel.

10. The one or more non-transitory computer-readable storage media of claim 9, further comprising sequences of instructions which, when executed using one or more hardware processors of the message application processor cause the message application processor to perform transformation of the message from a first payload value to a second payload value.

11. The one or more non-transitory computer-readable storage media of claim 9 or 10, further comprising sequences of instructions which, when executed using one or more hardware processors of the message application processor cause the message application processor to perform transformation of the status value to a third state.

12. The one or more non-transitory computer-readable storage media of any one of claims 9 - 11, the first request further comprising one or more media links, the one or more non-transitory computer-readable storage media further comprising sequences of instructions which, when executed using one or more hardware processors of the message application processor cause the message application processor to perform formatting the digital electronic message to include one or more media items that the media links reference.

13. The one or more non-transitory computer-readable storage media of any one of claims 9 - 11, the first request further comprising one or more media links, the one or more non-transitory computer-readable storage media further comprising sequences of instructions which, when executed using one or more hardware processors of the message application processor cause the message application processor to perform accessing the one or more media links, uploading one or more media items that the media links reference, and formatting the digital electronic message to include the one or more media items after the uploading.

14. The one or more non-transitory computer-readable storage media of any one of claims 9 - 13, further comprising sequences of instructions which, when executed using one or more hardware processors of the message application processor cause the message application processor to perform receiving, from the separate application server computer executing the particular computer program application to create, a second request to install the particular communication channel among the plurality of different communication channels and, in response, updating a database record for an account associated with the separate application server computer to specify that the particular communication channel is active for the separate application server computer.

15. The one or more non-transitory computer-readable storage media of any one of claims 9 - claim 14, further comprising sequences of instructions which, when executed using one or more hardware processors of the message application processor cause the message application processor to perform receiving, in the first request, an access key and in response:
retrieving from a database an access profile that is associated in a database record with the access key;
inspecting one or more permissions in the access profile;
executing the creating, transitioning, and selecting only in response to determining that at least one permission among the one or more permissions authorizes processing messages for the particular communication channel;
and/or
the plurality of different communication channels comprising two or more of SMS; MMS; e-mail; WHATSAPP; FACEBOOK MESSENGER; WEIXIN/WECHAT; QQ; TELEGRAM; SNAPCHAT; SLACK; SIGNAL; SKYPE; DISCORD; VIBER.

16. The one or more non-transitory computer-readable storage media of any one of claims 9 - 15, the first state and the second state comprising two states among a plurality of different possible states of a state machine that the message application processor implements to process the message;
wherein the different possible states may comprise: created, scheduled, buffered, sent, delivered, delivery failure, expired; and/or optionally
the operation in a flow definition specifies a plurality of machine executable script code instructions.
